**Europäisches Patentamt**

**European Patent Office**

**Office européen des brevets**

(11) Veröffentlichungsnummer: **0 122 332**
**A1**

(19)

(12) # EUROPÄISCHE PATENTANMELDUNG

(21) Anmeldenummer: **83112450.8**

(22) Anmeldetag: **10.12.83**

(51) Int. Cl.³: **G 03 B 17/56**
**F 16 M 13/04**

(30) Priorität: **10.03.83 DE 3308509**

(43) Veröffentlichungstag der Anmeldung:
**24.10.84 Patentblatt 84/43**

(84) Benannte Vertragsstaaten:
**AT BE CH DE FR GB IT LI LU NL SE**

(71) Anmelder: **Knaudt, Hermann**
**Drosselweg 24**
**D-8500 Nürnberg 30(DE)**

(72) Erfinder: **Knaudt, Hermann**
**Drosselweg 24**
**D-8500 Nürnberg 30(DE)**

(74) Vertreter: **Liermann, Manfred**
**Josef-Schregel-Strasse 19**
**D-5160 Düren(DE)**

(54) **Schulter-Hand-Stativ für fotographische Geräte.**

(57) Es wird ein Schulter-Hand-Stativ für fotografische Geräte vorgeschlagen welches bei schneller Betriebsbereitschaft auf kleinstem Raum zu verstauen ist und dennoch eine optimale Kameraführung und Kamerahandhabung erlaubt. Hierbei soll das Aufnahmeteil für das fotografische Gerät dieses sicher -insbesondere gegen Verdrehen- halten und das Gerät soll schnell und einfach auswechselbar sein. Dies wird bei einem genannten Stativ mit einem Aufnahmeteil welches auf einem Träger angeordnet ist, der einerseits mit einem Handgriff und andererseits mit einem Ausleger verbunden ist, wobei das zweite Ende des Auslegers mit einer zusammenklappbaren Schulterstütze verbunden ist und wobei der Handgriff eine Taste aufweist, die mit dem Gerät zur Auslösung in Wirkverbindung steht dadurch erreicht, daß das Aufnahmeteil im wesentlichen aus einem am Träger angeordneten Halter mit einem formschlüssig einrastbaren Adapter besteht und daß die Verbindungen am Träger als schnell entriegelbare Schwenkgelenke mit nur einer Schwenkachse und die Verbindungen der Schulterstütze als Gelenk mit zwei rechtwinklig zueinander stehenden Schwenkachsen ausgebildet ist, wobei der Träger in Gebrauchschaltung links neben dem Ausleger angeordnet ist und daß am Handgriff mindestens eine weitere Taste für den Filmtransport vorgesehen ist, wobei die Übertragungseinrichtungen aller Tastensignale im wesentlichen im Innern des Stativs und am Aufnahmeteil angeordnet sind.

EP 0 122 332 A1

./...

Croydon Printing Company Ltd.

Fig. 1

## Schulter-Hand-Stativ für fotografische Geräte

Die Erfindung betrifft ein Schulter-Hand-Stativ für fotografische Geräte mit einem Aufnahmeteil welches auf einem Träger angeordnet ist, der einerseits mit einem Handgriff und andererseits mit einem Ausleger verbunden ist, wobei das zweite Ende des Auslegers mit einer zusammenklappbaren Schulterstütze verbunden ist und wobei der Handgriff eine Taste aufweist, die mit dem Gerät zur Auslösung in Wirkverbindung steht.

Geräte der beschriebenen Art sind beispielsweise bekannt geworden durch das GM 79 18 069. Diese Geräte haben aber den Nachteil, daß sie immer noch zu weich sind und zu unhandlich in der Bedienung sind. Ebenso ist eine schnelle Bildfolge mit diesen Geräten nicht zu erreichen, weil die linke Hand ständig zwischen Objektiveinstellung und Filmtransporthebel an der Kamera hin und her gehen muß. Dies ist besonders kompliziert, weil der Hebel für den Filmtransport an der Kamera immer rechts angeordnet ist. Er ist damit bei Verwendung solcher Stative außer Reichweite für die linke Hand. Daher sind solche Stative nur sinnvoll anwendbar, wenn die Kamera für den Filmtransport einen Motorantrieb besitzt.

Die Auslösetaste am Handgriff ist in aller Regel bei solchen Stativen mittels eines sogen. Drahtauslösers mit dem Auslöser an der Kamera verbunden. Abgesehen von dem störenden Drahtauslöser birgt dieser jedoch auch die Gefahr, daß auch bei zusammengeklapptem Stativ durch leichten Druck auf den Auslöseknopf, die schußbereit gehaltene Kamera unbeabsichtigt ausgelöst werden kann.

Die Kamera ist bei den bekannten Stativen über einen Gewindebolzen befestigt. Diese Art der Befestigung birgt die Gefahr, daß bei einer Schwenkung der Kamera um 90° um Hochformataufnahmen zu machen, die Kamera sich vom Gewinde losschraubt, weil der Schwerpunkt des gesamten fotografischen Gerätes nicht genau durch die Gewindeachse geht.

Aus den vorbeschriebenen Nachteilen ergibt sich für die Erfindung die Aufgabe, ein Stativ der eingangs beschriebenen Art vorzuschlagen, welches ohne andere Hilfsmittel eine sichere Kameraführung, auch bei Hochformathaltung, sowie eine einfache Kamerahandhabung erlaubt und welches bei schneller Betriebsbereitschaft gleichzeitig auf geringstmöglichem Raum verstaut werden kann.

Diese Aufgabe ist erfindungsgemäß bei einem Stativ der eingangs beschriebene Art dadurch gelöst, daß das Aufnahmeteil im wesentlichen aus einem am Träger angeordneten Halter mit einem formschlüssig einrastbaren Adapter besteht und daß die Verbindungen am Träger als schnellentriegelbare Schwenkgelenke mit nur einer Schwenkachse und die Verbindung an der Schulterstütze als Gelenk mit zwei rechtwinklig zueinander stehenden Schwenkachsen ausgebildet ist, wobei der Träger in Gebrauchshaltung links neben dem Ausleger angeordnet ist und daß am Handgriff mindestens eine weitere Taste für den Filmtransport vorgesehen ist, wobei die Übertragungseinrichtungen aller Tastensignale im wesentlichen im Innern des Stativs und am Aufnahmeteil angeordnet sind. Ein Stativ solcher Art ist wegen seiner schnell entriegelbaren Schwenkgelenke sehr schnell auf- und einklappbar und im aufgeklappten Zustand wegen der Verriegelung sehr starr, wodurch eine ruhige und sichere Kameraführung erreicht werden kann. Die besondere Art der gelenkigen Anordnung der Schulterstütze erlaubt eine problemlose und sicher beherrschbare Hochkantführung der Kamera, wobei der formschlüssig in den am Träger angeordneten Halter einrastbare Adapter für die Kamera, deren blitzschnellen Wechsel und absolut sicheren Halt auch in Hochkantlage gewährleistet. Ein Lösen von Gewindeteilen ist weder nötig noch möglich. Da am Handgriff des Stativs sowohl die Taste für die Auslösung als auch eine Taste für den Filmtransport vorgesehen ist, kann die Betätigung des unerreichbar für die linke Hand liegenden Filmtransporthebels an der Kamera entfallen. Auslösung und Filmtransport sind vielmehr mit einer einzigen Hand und in blitzschneller Folge möglich. Da außerdem die Übertragungseinrichtungen für die Auslösung und den Filmtransport noch im Inneren des Stativs und im Aufnahmeteil für die Kamera angeordnet sind, sind zusätzliche Gefahrenteile wie z.B. der bisher übliche Drahtauslöser, nicht mehr erforderlich. Darüber hinaus sorgt die besondere Anordnung des Trägers, der in Gebrauchshaltung links neben dem Ausleger (und nicht wie bisher üblich darüber) angeordnet ist dafür, daß der Sucher der Kamera eine geeignete Lage für das Auge des Fotografen einnimmt, wodurch unangenehme und ermüdende Kopfhaltungen vermieden werden können. Gleichzeitig sorgt diese Nebeneinanderanordnung zusammen mit der ebenfalls zusammenklappbaren Schulterstütze für sehr geringe Abmessungen im zusammengeklappten Zustand.

In einer Ausgestaltung der Erfindung ist vorgesehen, daß der Adpater mindestens eine Betätigungseinrichtung aufweist, die einerseits mit dem Auslöser für das Gerät und andererseits mit der Taste zur Auslösung am Handgriff mechanisch und/oder elektromagnetisch verbunden ist. Hierdurch wird der Adapter sozusagen zum "Interface" zwischen Kamera und Stativ und kann daher spezifischen Baumerkmalen jeder Kamera angepaßt werden.

Eine weitere Ausgestaltung der Erfindung sieht vor, daß der Adapter eine Betätigungseinrichtung aufweist, die einerseits mit dem Filmtransportsystem der Kamera und andererseits mit der weiteren Taste am Handgriff in Wirkverbindung steht. Hierdurch wird der Adapter

- ? -

vorteilhafterweise gleichzeitig auch zum "Interface" zwischen Kamera und Stativ für das Filmtransportsystem der Kamera.

Eine andere Ausgestaltung der Erfindung sieht vor, daß der Adapter als rechteckiges Kastenprofil etwa von der Länge der Kamerabreite ausgebildet und auf dessen Oberseite die Kamera befestigbar ist, wobei im Inneren des Kastenprofils eine mit der Transporteinrichtung der Kamera verbundene federrückstellbare Drehkupplung vorgesehen ist, die über ein flexibles Zugelement mit einem Schiebeteil verbunden ist, welches seinerseits über eine Öffnung durch eine Ausnehmung auf der Unterseite des Adapters mit einem im Stativ angeordneten Betätigungshebel einerseits und mit einem Arm eines im Inneren des Kastenprofils angeordneten Winkelhebels andererseits in Wirkverbindung steht, wobei der zweite Arm des Winkelhebels eine Auslöseeinrichtung betätigt. Dies ist eine günstige Gestaltung des Adapters selbst für dessen Handhabung und eine funktionssichere und einfache Konstruktion in seinem Inneren zur Auslösung der Kamera und zur Betätigung des Filmtransportsystems der Kamera. Zur Erfüllung aller notwendigen Funktionen genügt ein einziger Betätigungshebel des Stativs, der über eine einfache Ausnehmung in den Adapter hineinreicht.

In einer vorteilhaften Weiterbildung der Erfindung ist vorgesehen, daß der Betätigungshebel auf einer im Träger drehbar und axial verschiebbar gelagerten Schwenkachse befestigt ist, auf deren handgriffseitigem Ende ein weiterer Betätigungshebel befestigt ist, der durch entsprechende Öffnungen in den Handgriff hineinragt und dort von der Taste für den Filmtransport geschwenkt und von der Taste für die Auslösung axial verschoben wird. Dies ist eine außerordentlich einfache mechanische Möglichkeit alle Funktionen zu übertragen. Durch den außerordentlich einfachen mechanischen Aufbau wird natürlich gleichzeitig

- 7 -

größtmögliche Zuverlässigkeit und Verschleißarmut erreicht. Gleichzeitig wird hierdurch der zu betreibende fertigungstechnische Aufwand minimiert, wodurch die Gesamtkosten niedrig gehalten werden können.

In weiterer Ausgestaltung der Erfindung ist vorgesehen, daß die Schwenk- und Verschiebebewegung gegen eine Vorlast einer Feder erfolgt. Hierdurch wird auf einfachste Art und Weise die Rückstellung in die Ausgangslage erreicht.

Eine weitere Ausgestaltung der Erfindung sieht vor, daß die Taste für den Filmtransport durch einen Längsschlitz seitlich des Haltegriffes in diesen hinein und dort in einer Längsführung für einen Daumen erreichbar und verschiebbar geführt und über einen Mitnehmer mit dem Betätigungshebel in Wirkverbindung gebracht ist. Diese Art der Führung und der Bewegungsrichtung der Taste für den Filmtransport am Haltegriff kommt in seiner Lage und seiner Bewegungsrichtung der Bewegungsfähigkeit eines menschlichen Daumens entgegen und ist daher ergonomisch günstig gestaltet. Hierbei ist die notwendige Verbindung mit dem Betätigungshebel äußerst einfach zu gestalten.

Nach einer anderen Ausgestaltung der Erfindung ist vorgesehen, daß die Taste für die Auslösung als Drucktaste für eine Zeigefingerbetätigung im Inneren des Handgriffes mit einer am Betätigungshebel anliegenden Betätigungsleiste verbunden ist. Hierdurch kann der Betätigungshebel mit der ihn tragenden Schwenkachse in jeder ihm möglichen Winkellage sicher von der Drucktaste für die Auslösung betätigt werden, ohne daß die Drucktaste selbst hierdurch in ungünstiger Richtung belastet würde.

Nach einer ergänzenden Ausgestaltung der Erfindung ist vorgeschlagen, daß die Betätigungsleiste als um eine Achse parallel zur Ebene der Schwenkbewegung des Betätigungshebels schwenkbarer Schwenkbügel ausgebildet ist. Dies ist eine besonders einfache und funktionssichere Ausbildung der Betätigungsleiste. Gleichzeitig kann durch diese Art der Ausbildung als Schwenkbügel der Weg für die Drucktaste bis zur Auslösung in einer geeigneten oder gewünschten Größenordnung übersetzt werden, so daß die Auslösung mehr oder weniger empfindlich gestaltet werden kann.

Wiederum nach einer Ausgestaltung der Erfindung ist vorgesehen, daß der Handgriff als rechteckiges Kastenprofil ausgebildet ist und über einen am Kastenprofil angeordneten Gelenkbolzen als Schwenkachse schwenkbar in entsprechenden Lagerbohrungen des Trägers gelagert und über einen zweiten im Träger unter Federvorlast parallel zum Gelenkbolzen verschiebbaren Arretierbolzen, der in eine entsprechende Bohrung des Handgriffes einrastet, in Benutzungslage arretiert ist. Diese Art der Ausbildung des Handgriffs macht die Verwendung von Halbzeugprofilen möglich, wodurch wiederum die Herstellkosten niedrig gehalten werden können. Gleichzeitig ermöglicht diese Ausbildung die sichere Anordnung des Gelenkbolzens für die Schwenkbewegung, so daß eine einfach gestaltbare, jedoch gleichzeitig dauerhafte und feste Gelenkverbindung für eine Beweglichkeit um eine Achse geschaffen werden kann. Eine Arretierung in Gebrauchslage schafft ein starres System zwischen Handgriff und Träger. Da der Arretierbolzen unter Federvorlast steht, schnappt dieser selbständig in die entsprechende Arretierbohrung ein und wird dort sicher gehalten. Ein einfaches Herausziehen dieses Arretierbolzens sorgt für das blitzschnelle Einschwenken des Handgriffs.

Nach einer ergänzenden Ausgestaltung der Erfindung ist vorgesehen, daß nach Einschwenken des Handgriffes um 90° der Arretierbolzen in eine an entsprechender Stelle in einer Seitenwand des Handgriffs vorgesehene Arretierzentrierung einrastet. Hierdurch kann mit dem gleichen Arretierbolzen auch die Arretierung in der eingeklappten Lage erreicht werden. Ein kurzes Lösen dieses Arretierbolzens sorgt dann für das einfache Schwenken des Handgriffes in die jeweils andere Richtung, wobei bei Erreichen der jeweils anderen Richtung der Arretierbolzen selbständig wieder einschnappt.

Eine andere Ausgestaltung der Erfindung wiederum sieht vor, daß Träger und Ausleger aus rechteckigem oder quadratischem Kastenprofil gebildet und über einen Gelenkbolzen parallel zum Gelenkbolzen des Handgriffes um die Schwenkachse schwenkbar miteinander verbunden sind, wobei in Gebrauchslage beide Teile über einen unter Vorlast einer Feder parallel zum Gelenkbolzen verschieblichen Arretierbolzen, der in eine entsprechende Gegenbohrung eingreift, arretiert sind. Auch hier erlaubt die Verwendung von Halbzeugprofilen eine kostengünstige Fertigung und gleichzeitig die konstruktive Möglichkeit von sicheren und starren Gelenkverbindungen. Der unter der Vorlast einer Feder stehende Arretierbolzen sorgt für eine starre Verriegelung in Gebrauchslage, die außerdem blitzschnell lösbar als auch ebenso schnell einrastbar ist.

Eine ergänzende Ausgestaltung der Erfindung sieht vor, daß im Träger und oberhalb des Arretierbolzens eine Öffnung vorgesehen ist, welche von einer Verschiebeplatte abgedeckt ist, die mit einem Verbindungsstück mit dem Arretierbolzen verbunden ist. Dies ist eine besonders einfache und außerdem sehr klein bauende Möglichkeit für eine Handbetätigung des Arretierbolzens am Handgriff.

Bezüglich eines anderen Gelenkes wird in einer Ausgestaltung der Erfindung vorgeschlagen, daß der Arretierbolzen mit einem Kopf nach außen übersteht unter den ein parallel zum Ausleger angeordnetes Blech greift, welches mit einer Griffleiste frei übersteht und bei Betätigung der Griffleiste den Arretierbolzen verschiebt. Diese Art der Betätigung für den Arretierbolzen kann außerordentlich flach gebaut werden, so daß auch in diesem Bereich unnötig überstehende Teile vermieden werden können.

In einer weiteren Ausgestaltung der Erfindung wird noch vorgeschlagen, daß das zweite Ende des Auslegers gabelförmig geschlitzt ist und die verbleibenden Stege eine Schwenkachse tragen, auf der ein Schwenkstück drehbar gelagert ist mit zwei rechtwinklig zueinander stehenden Seiten und einem verbindenden Kreisbogenstück, wobei das Kreisbogenstück zwei um 90° versetzte Vertiefungen aufweist, in welche ein im Ausleger unter Federvorlast verschieblich angeordnetes Positionierstück einrasten kann und wobei das Schwenkstück rechtwinklig zu einer Seite und zur Achse für das Schwenkstück eine Schwenkachse für die Schulterstütze trägt. Hierdurch wird auf recht einfache Weise die gewünschte Beweglichkeit und Schwenkbarkeit für die Schulterstütze erreicht. Die Vertiefungen in Zusammenarbeit mit den unter Federvorlast stehenden Positionierstücken können hierbei für eine Rasterung in gewünschten Stellungen der Schulterstütze sorgen.

Nach einer ergänzenden Ausgestaltung der Erfindung ist vorgesehen, daß die Schulterstütze im wesentlichen aus an ihrem einen Ende um etwa 90° aufklappbar miteinander verbundenen Haltern besteht deren zweite Enden über ein flexibles Band miteinander verbunden sind, wobei der eine Halter auf der Schwenkachse für die Schulterstütze drehbar angeordnet ist. Hierdurch wird eine Gestaltung einer zusammenklappbaren Schulterstütze erreicht, die bei fester Anlage an die Schulter nicht aufklappen und damit ausweichen kann und die in ihrer Gestaltung dennoch
die gewünschte Gelenkigkeit zuläßt.

Eine weitere Ausgestaltung der Erfindung sieht vor,
daß der Halter im wesentlichen aus einer auf dem Träger
angeordenten Bodenplatte mit einer Ausnehmung für den
Betätigungsbehebel besteht deren Rückseite in einem
Abstand zur Bodenplatte zwei vorwärts gerichtete Krallen
aufweist, die in entsprechende Fixieröffnungen des Adapters
eingreifen, wobei auf der gegenüberliegenden Seite ein
Riegel in einem Anschlaggehäuse für die erforderliche
Axialfixierung und Niederhaltung des Adapters sorgt.
Dies ist eine besonders einfache und funktionssichere
Gestaltung des Halters der eine sichere Fixierung des
Adapters und dessen schnelle Auswechselbarkeit gewährleistet.

In einer ergänzenden Ausgestaltung der Erfindung ist
vorgesehen, daß der Riegel unter der Vorlast einer Feder
steht und über einen Kipphebel entriegelt werden kann.
Auf diese Art und Weise kann eine Betätigung des Riegels
beim Einrasten des Adapters entfallen. Der Adapter muß
einfach mit seinen Fixieröffnungen in die Krallen des
Halters eingesetzt und nach vorne gekippt werden, wodurch
der Riegel zunächst zurückgeschoben wird und nachfolgend
über seine Federvorlast einschnappt.

Eine weitere ergänzende Ausgestaltung der Erfindung
sieht noch vor, daß die Bodenplatte einen Positionierbolzen
aufweist, der in eine entsprechende Bohrung des Adapters
eingreift. Dieser Positionierbolzen sorgt für eine ganz
exakte Positionierung des Adapters auf der Bodenplatte
und damit für eine entsprechend exakte Positionierung
der Kamera. Gleichzeitig werden hierdurch alle Übertragungselemente während des Zusammensetzens exakt positioniert
und können daher ohne Gefahr einer Beschädigung ineinandergreifen.

Nach einer anderen ergänzenden Ausgestaltung der Erfindung ist noch vorgesehen, daß der Gelenkbolzen leicht geneigt im Träger fest angeordnet ist und die Gelenkbohrung im Ausleger bei eingeklapptem Ausleger mit gleicher Neigung ausgeführt ist. Auf diese Art und Weise kann das Gesamtstativ so gestaltet werden, daß in ausgeklapptem Zustand -beispielsweise für besondere Kameraformender Ausleger schräg seitwärts gerichtet ist.

Eine variierende Ausgestaltung der Erfindung sieht noch vor, daß die Verbindung von Ausleger und Träger als Schiebeverbindung gestaltet ist. Auch eine Schiebeverbindung an genannter Stelle weist alle angestrebten mechanischen und Handhabungsvorteile auf. Auch kann sie kostengünstig hergestellt werden.

Eine Ergänzung hierzu sieht nach der Erfindung vor, daß mit dem Träger etwa in Höhe des Aufnahmeteils eine Schiebemuffe verbunden ist und der Ausleger in der Schiebemuffe verschieblich und in Gebrauchslage formschlüssig arretierbar angeordnet ist. Dies ist eine mechanisch günstige Gestaltung der gewünschten Schiebeverbindung.

In weiter ergänzender Ausgestaltung der Erfindung ist vorgesehen, daß eine unter Träger und Schiebemuffe befestigte Platte beide Teile miteinander verbindet, wobei die Schiebemuffe auf der Platte um eine Hochachse schwenkbar angeordnet ist. Durch diese Ausgestaltung kann problemlos auch eine gewünschte leichte Schräglage des Auslegers erreicht werden. Ist diese Hochachse gleichzeitig in geeigneter Weise schräg im Raum liegend angeordnet, so ist eine entsprechende gewünschte Raumschwenkbewegung des Auslegers beispielsweise seitwärts und nach unten möglich.

Eine weiter ergänzende Ausgestaltung der Erfindung sieht noch vor, daß die Schwenkbewegung der Schiebemuffe durch eine Arretierung rastbar ist. Hierdurch können auf einfache Weise verschiedene Schwenklagen des Auslegers als auch eine gewünschte Endlage des Auslegers arretiert werden, sofern eine Arretierung des Auslegers nicht durch Anschlag am Träger bei Erreichen der Endlage gewünscht oder vorgesehen ist.

Schließlich ist nach einer Ausgestaltung der Erfindung noch vorgesehen, daß der Ausleger als Hohlprofil ausgebildet ist, in dem ein Profil gleicher Querschnittsform angeordnet ist, dessen Querschnitt über einen genügend langen Teil längsgeteilt ist, wobei eine zweite Hälfte des Querschnitts abgetrennt und über einen Gelenkbolzen mit dem inneren Profil aufklappbar verbunden ist. Dies ist eine besonders günstige Gestaltung einer zusammenklappbaren Schulterstütze, die in zusammengeklapptem Zustand in den Ausleger axial hineingeschoben werden kann und damit keinen zusätzlichen äußeren Platz benötigt.

Die Erfindung soll nun anhand der beigefügten Zeichnungen, in denen ein Ausführungsbeispiel dargestellt ist, näher beschrieben werden.

Es zeigen:

Figur 1    Stativ in Gebrauchsstellung und Seitenansicht

Figur 2    Ansicht in Richtung des Pfeiles A nach Figur 1

Figur 3    Ansicht wie Figur 2, jedoch um 90° geschwenkt

Figur 4    Ansicht in Richtung des Pfeiles B nach Figur 1

Figur 5    Ansicht wie Figur 1, jedoch Stativ zusammengeklappt

| | |
|---|---|
| Figur 6 | Ansicht wie Figur 4, jedoch Stativ zusammengeklappt |
| Figur 7 | Ansicht in Richtung des Pfeiles C nach Figur 6 |
| Figur 8 | Einzelteil |
| Figur 9 | Schnitt G-H nach Figur 17 |
| Figur 10 | Schnitt A-B nach Figur 9 |
| Figur 11 | Schnitt C-D nach Figur 9 |
| Figur 12 | Schnitt E-F nach Figur 9 |
| Figur 13 | Schnitt O-P nach Figur 17 |
| Figur 14 | Schnitt Q-R nach Figur 18 |
| Figur 15 | Schnitt K-L nach Figur 20 |
| Figur 16 | Prinzipskizze für Adapterrasterung |
| Figur 17 | Draufsicht im Griffbereich |
| Figur 18 | Schnitt U-V nach Figur 13 |
| Figur 19 | Schnitt W-X nach Figur 13 |
| Figur 20 | Ansicht in Richtung des Pfeiles D nach Figur 15 mit Bruchausschnitten |
| Figur 21 | Schnitt I-I nach Figur 15 |
| Figur 22 | Schnitt M-N nach Figur 17 |
| Figur 23 | Schnitt II-II nach Figur 26 |
| Figur 24 | Schnitt III-III nach Figur 26 |
| Figur 25 | Schnitt IV-IV nach Figur 23 |
| Figur 26 | Schnitt V-V nach Figur 24 |
| Figur 27 | Teilansicht in Richtung des Pfeiles E der Figur 28 nach Einschwenkung in Richtung des Pfeiles F in Figur 28 |
| Figur 28 | um 180° schwenkte Variante eines Stativs nach Figur 1 |
| Figur 29 | Schnit VI-VI nach Figur 28 |
| Figur 30 | Ansicht in Richtung des Pfeiles G nach Figur 28 mit Teilausschnitten |
| Figur 31 | Ansicht in Richtung des Pfeiles H nach Figur 30 |

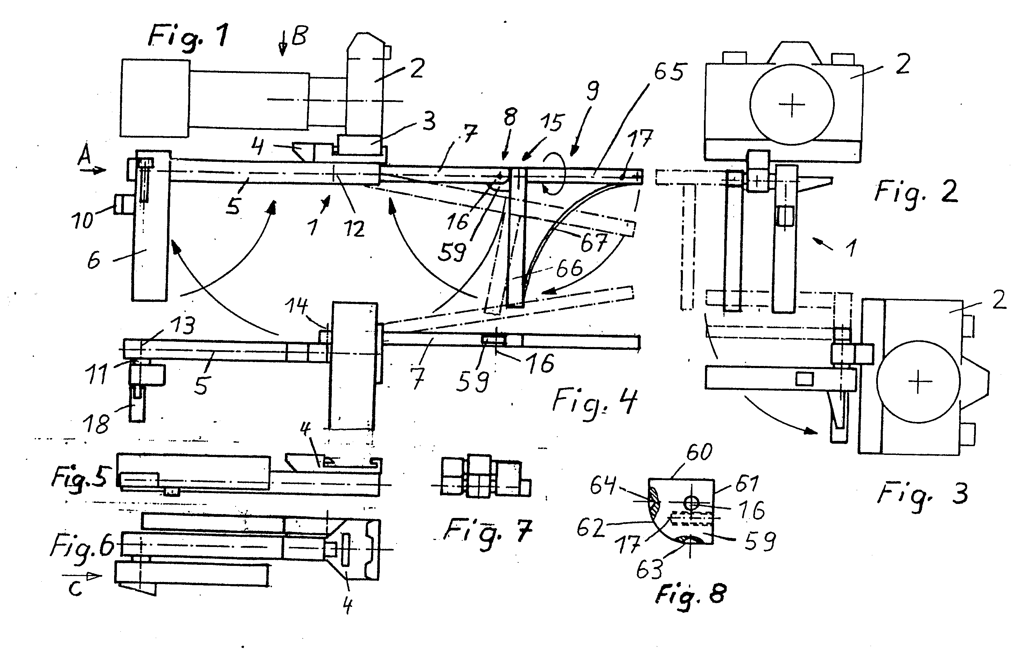

Das Schulter-Hand-Stativ besteht im wesentlichen aus einem Träger 5 (Figur 1) an dessen vorderem Ende ein Handgriff 6 über eine gelenkige Verbindung 11 mit dem Träger 5 verbunden ist. Am Handgriff 6 ist eine Taste 10 beispielsweise für die Auslösung eines fotografischen Gerätes 2 sowie eine Taste 18 beispielsweise für den Filmtransport am Gerät 2 vorgesehen. Am anderen Ende des Trägers 5 des Schulter-Hand-Stativs 1 ist eine weitere Verbindung 12 vorgesehen, an welcher ein Ausleger 7 mit dem Träger 5 verbunden ist und zwar derart, daß der Träger 5 bei Benutzungshaltung links vom Ausleger 7 angeordnet ist. Beide Verbindungen 11 und 12 am Träger 5 weisen eine Schwenkachse 13 bzw. 14 auf, wobei um die Schwenkachse 13 der Handgriff 6 und um die Schwenkachse 14 der Ausleger 7 schwenkbar ist.

Am zweiten Ende 8 des Auslegers 7 ist dieser gabelförmig ausgenommen, wobei die verbleibenden Seitenwände der Gabel als Halterung für eine Schwenkachse 16 verwendet werden, welche als Schwenkachse für ein Schwenkstück 59 dient (siehe Figur 8) welches über zwei rechtwinklig zueinander angeordnete Seiten 60 und 61 verfügt, die über ein Kreisbogenstück 62 an ihren Enden miteinander verbunden sind. Das Kreisbogenstück 62 weist Vertiefungen 63 und 64 auf, in welche beispielsweise eine federbelastete Kugel als Raster oder Arretierelement einrasten kann. Diese federbelastete Kugel kann axial verschieblich im Inneren des Auslegers 7 angeordnet sein.

In die Seite 61 und senkrecht zu dieser ist eine Schwenkachse 17 eingesetzt, auf welcher der Halter 66 der Schulterstütze 9 schwenkbar gelagert ist. Der Halter 66 ist darüber hinaus mit einem zweiten Halter 65 zusammenklappbar mit einer Verbindung 15 verbunden, wobei die freien Enden des Halters 65 und 66 mit einem flexiblen Band 67 miteinander verbunden sind, welches als Auflage für die Schulter dient. Gleichzeitig werden auf diese Art bei einer Benutzung des Stativs 1 durch den Druck auf das flexible Band 67 durch die Schulter die Halter 65 und 66 nach innen zur Schulter hin bewegt, so daß die Schulter fest umschlossen wird.

Etwa im Bereich der Verbindung 12 am Träger 5 ist ein Halter 4 mit dem Träger 5 verbunden in welchen ein Adapter 3 eingesetzt werden kann. Der Adapter 3 ist hierbei auf die Anschlußmaße und die Lage der Bedieneinrichtungen am Gerät 2 angepaßt.

Zur Bedienung eines Gerätes 2 nach dem Ausführungsbeispiel ist der Adapter 3 als rechteckiges Kastenprofil 25 ausgebildet, welches auf seiner Oberseite 27 das Gerät 2 tragen soll und hierzu eine dem Gerät 2 angepaßte Länge 26 aufweist. Die reine Befestigung des Gerätes 2 kann hierbei an die Möglichkeiten dieses Gerätes angepaßt sein. Beispielsweise könnte ein Gewindebolzen 89 vorgesehen sein, welcher in das Stativgewinde des Gerätes 2 eingeschraubt wird. Auf diese Art und Weise ist das Gerät 2 zwar an der Oberseite 27 des Adapters 3 befestigt, jedoch nicht gegen Losdrehen mit entsprechendem Verschwenken gesichert. Eine solche Sicherung kann in beliebiger Weise, beispielsweise durch Einsetzen einer zweiten Schraube erfolgen. Sie ergibt sich im Ausführungsbeispiel jedoch von selbst durch die notwendige Verbindung des Adapters 3 mit dem auf der Unterseite des Gerätes 2 vorgesehenen Anschlußteil für den Filmtransport. In dieses Anschlußteil greift eine im Adapter 3 drehbar gelagerte Drehkupplung 28 ein, welche hierdurch einerseits die Verbindung mit der Filmtransporteinrichtung der Kamera herstellt und andererseits eine Verdrehsicherung des gesamten Gerätes 2 darstellt, wodurch dieses gegen Lösen und Verschwenken gesichert ist. Die Drehkupplung 28 ist im Innern des Adapters 3 umfaßt von einem elastischen Zugelement 29' dessen eines Ende an der Drehkupplung 28 befestigt ist und dessen freies Ende an einem Schiebeteilo 19 befestigt ist. Das Schiebeteil 19 ist in Längsrichtung des Adapters 3 beweglich und weist eine Öffnung 29 auf, in welche ein Betätigungshebel 24 eingreift der durch eine entsprechende Ausnehmung 30 in das Innere des Adapters 3 hineingeführt ist.

Das Schiebeteil 19 liegt an seiner Rückseite an einem Winkelhebel 20 an,dessen Schwenkachse 110 parallel zur Verschieberichtung des Schiebeteils 19 liegt, so daß eine reine Verschiebebewegung des Schiebeteils 19 den Winkelhebel 20 nicht betätigt. Wird das Schiebeteil 19 nun in Längsrichtung des Adapters 13 bewegt, so wird gleichzeitig über das damit ebenfalls bewegte elastische Zugelement 29' die Drehkupplung 28 gedreht, die hierdurch ihrerseits die Filmtransporteinrichtung des Gerätes 2 in gewünschter Weise betätigt. Die Rückstellung in Ausgangsposition kann hierbei, je nach Ausführungsform, durch kameraseitig vorgesehene Einrichtungen erfolgen als auch beispielsweise dadurch, daß das an der Drehkupplung 28 befestigte elastische Zugelement 29' gleichzeitig mit einer Zugfeder verbunden ist, die damit für die notwendige Rückstellung in Ausgangsposition sorgt.

Der Winkelhebel 20 ist mit einer Auslöseeinrichtung 32 verbunden, die ihrerseits mit dem Auslöser 23 am Gerät 2 verbunden ist. Eine Kippbewegung des Winkelhebels 20 wird auf den Auflöser 32 als Längsverschiebung übertragen, der hierdurch seinerseits den Auslöser 23 des Gerätes betätigt. Um dies zu erreichen, muß das Schiebeteil 19 senkrecht zu seiner bisher beschriebenen Bewegungsrichtung verschoben werden. Auch diese Bewegungsrichtung wird, wie später beschrieben wird, vom Betätigungshebel 24 bewirkt. Durch eine solche Verschieberichtung drückt das Schiebeteil 19 gegen den Arm 21 des Winkelhebels 20 wodurch als Folge der hierdurch verursachten Drehung um die Achse 110 des Winkelhebels 20 der Arm 22 des Winkelhebels 20 ebenfalls betätigt wird, der hierdurch eine entsprechende Schiebebewegung in die Auslöseeinrichtung 32 einleitet.

Natürlich lassen sich in den Adapter 3 auch weitere Bewegungseinrichtungen für Betätigungen einbauen, die in Abhängigkeit zur Auslösung oder zum Filmtransport stehen, wie beispielsweise eine Betätigungstaste für einen Meßwertspeicher am Gerät 2, sofern eine solche Einrichtung am Gerät 2 vorgesehen ist. Die notwendigen Auslösebewegungen können hierbei allesamt durch den Betätigungshebel 24 eingeleitet werden.

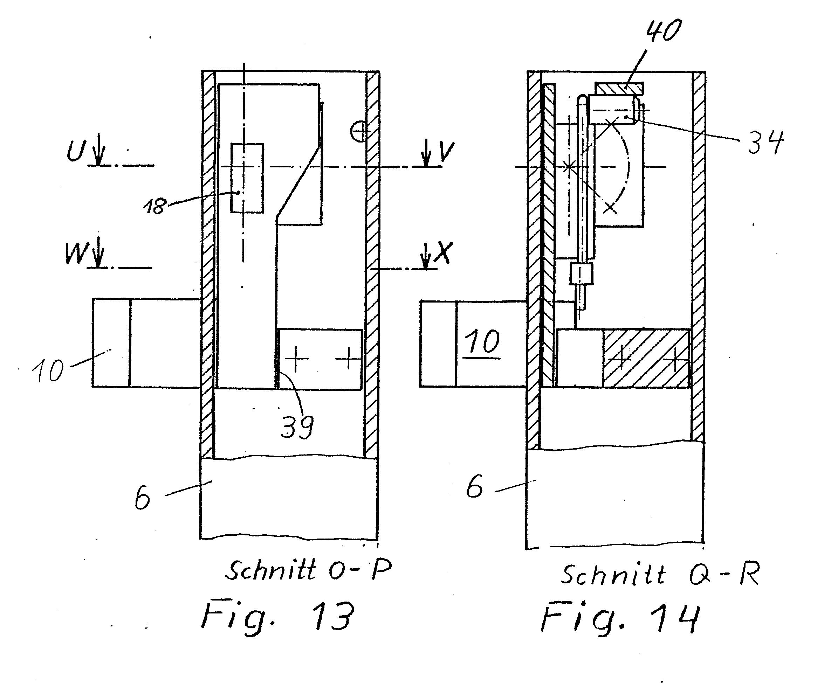

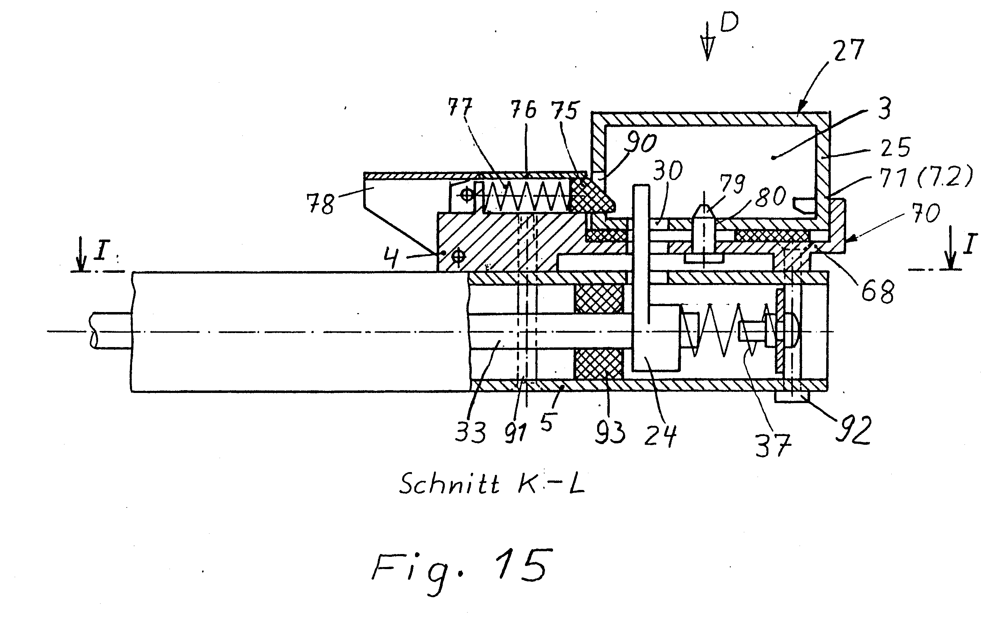

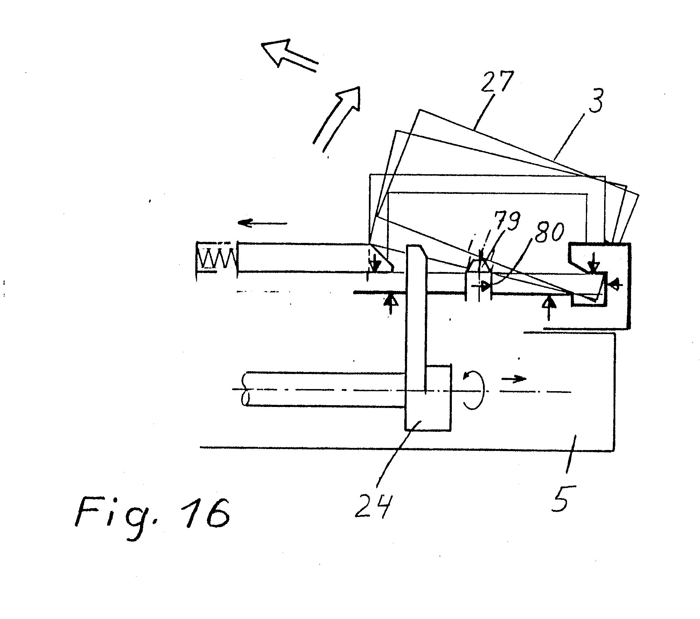

Um einen raschen und problemlosen Kamerawechsel zu ermöglichen und dennoch immer die notwendige präzise Relativlage des Adapters 3 zum Betätigungshebel 24 zu erreichen, weist der Adapter 3 auf seiner Rückseite im Ausführungsbeispiel Fixieröffnungen 73 und 74 auf. In diese Fixieröffnungen 73 und 74 greifen Krallen 71 und 72 ein, die an der Rückseite 70 der Bodenplatte 68 des Halters 4 gebildet sind. Hierdurch wird die erste Grobfixierung erreicht. Zur Feinpositionierung ist in der Bodenplatte 68 ein Positionierbolzen 79 vorgesehen, der in eine entsprechende Bohrung 80 im Boden des rechteckigen Kastenprofils 25 des Adapters 3 eingreift. Nach einem durch Verkanten und Rückwärtsschieben durchgeführten Einsetzen der Krallen 71 und 72 in die Fixieröffnungen 73 und 74 (siehe Figur 16) kann der Adapter 3 abwärts geschwenkt werden, wodurch der Positionierbolzen 79 in die Bohrung 80 eingreift und hierdurch den Adapter 3 feinausrichtet. Auf seiner Vorderseite weist das rechteckige Kastenprofil eine Öffnung 90 auf, in welche ein unter der Vorlast einer Feder 77 stehender Riegel 75, der in einem Anschlaggehäuse 76 verschiebbar angeordnet ist, einrastet. Um den Adapter 3 wieder vom Halter 4 zu trennen, ist es lediglich erforderlich, den Riegel 75 durch einen Druck auf den Kipphebel 78 aus der Öffnung 90 herauszuziehen, so daß der Adapter 3 an dieser Seite einfach hochgekippt und zum trennen nach vorne aus den Krallen 71 und 72 herausgezogen werden kann, wie dies in Figur 16 schematisch dargestellt ist. Der Halter 4 selbst mit seiner an ihm angeordneten Bodenplatte 68 kann hierbei beispielsweise über Schrauben 91 und 92 am Träger 5 befestigt sein.

Der alle Bewegungen im Adapter 3 auslösende Betätigungshebel 24 ist innerhalb des Trägers 5 auf einer dort drehbar und axial verschiebbar in Lagerstücken 93 und 94 gelagerten Schwenkachse 33 befestigt. Das zweite Ende der Schwenkachse 33 ist hierbei drehfest mit einem weiteren Betätigungshebel 34 verbunden, der über die Öffnungen 35 und 36 im Träger 5 und in der Seitenwand 48 des als rechteckiges Kastenprofil ausgebildeten Handgriffes 6 in diesen hineinragt. An der der Seitenwand 48 gegenüberliegenden Seitenwand des Handgriffs 6 weist dieser einen Längsschlitz 38 auf, durch welchen eine Taste 18 für den Filmtransport am Gerät 2 nach innen geführt und in ihrer Verschiebebewegung in der Längsführung 39 innen im Handgriff 6 geführt ist. Die Taste 18 ist hierbei mit einem Mitnehmer 40 verbunden, der am Ende des Betätigungshebels 34 anliegt und diesen bei Verschiebung mitnimmt. Wird nun also die Taste 18 beispielsweise vom Daumen einer menschlichen Hand abwärtsbewegt, so wird hierdurch über den Mitnehmer 40 der Betätigungshebel 34 und damit auch die Schwenkachse 33 und weiter der Betätigungshebel 24 geschwenkt. Hierdurch verursacht der Betätigungshebel 24 die bereits beschriebene Verschiebung des Schiebeteils 19 mit den ebenfalls bereits beschriebenen Folgen.

Auf seiner vorderen Schmalseite (Figur 19) weist der Handgriff 6 noch die nach innen geführte Taste 10 auf. Diese kann auf einem einfachen Führungsbolzen oder in sonstiger geeigneter Weise axial verschieblich geführt sein. Des weiteren ist im Inneren des Handgriffs 6 eine als Bügel ausgebildete Betätigungsleiste 41 um eine Achse 42 schwenkbar angeordnet. Weiterhin kann hierbei ein Druckstück 95 auf der Achse 42 schwenkbar vorgesehen sein, welches am zweiten Arm 41' der Betätigungsleiste 41 anliegen kann. An seinem freien Ende kann dann das Druckstück 95 von der Taste 10 betätigt werden, wodurch infolge der Bewegung des Druckstücks 95 ebenfalls die Betätigungsleiste 41 um ihre Achse 42 geschwenkt wird. Der zweite Arm 41' der Betätigungsleiste 41 liegt am Betätigungshebel 34 an, so daß infolge der Schwenkbewegung der Betätigungsleiste 41 der Betätigungshebel 34 und damit die Schwenkachse 33 axial verschoben werden. Diese Axialverschiebung erfolgt hierbei gegen die Kraft der Feder 37 welche am halterseitigen Ende des Trägers 5 als Spiraldruckfeder angeordnet ist. Hierbei kann die Spiraldruckfeder 37 gleichzeitig so ausgebildet werden, daß sie auch die Rückstellung der Schwenkbewegung der Schwenkachse 33 bewirkt, weil hierfür ja nur außerordentlich geringe Kräfte erforderlich sind. Natürlich kann für die Rückstellung der Schwenkbewegung auch ein unabhängiges Federelement vorgesehen sein.

Am Druckstück 95 sorgt ein Anschlag 96 dafür, daß die Taste 10 für die Auslösung nicht zu weit eingeschoben werden kann, wobei Taste 10 -wie im Ausführungsbeispiel- auch am Anschlag 96 anliegen kann.

Zur Herstellung der Verbindung 11 des Handgriffes 6 mit dem Träger 5 ist der Handgriff 6 auf dem freien Ende eines Gelenkbolzens 43 über die Seitenwand 48 befestigt. Der Gelenkbolzen 43 ist in entsprechenden Lagerbohrungen 44 und 45 im Träger 5 schwenkbar gelagert und in beliebiger Weise gegen axiales Herausschieben gesichert. Die Gesamtanordnung ist hierbei so, daß sich der Handgriff 6 neben dem Träger 5 befindet und nicht etwa darunter.

Diese Anordnung sorgt für einen einfachen Aufbau und für eine ruhige Handhabung des gesamten Stativs 1 in Verbindung mit dem auf der anderen Seite neben dem Träger 5 angeordneten Ausleger 7. Da Träger 5 nunmehr mitten zwischen Handgriff 6 und Ausleger 7 angeordnet ist, wird eine kippsichere, ruhige und einfach beherrschbare Lage des Gerätes 2 erreicht. Gleichzeitig ergibt diese Anordnung noch eine günstige Lage des fotografischen Gerätes 2 zum Auge des Bedieners und es wird bei einfachstem Aufbau ein Zusammenklappen auf kleinstem Raum ermöglicht, weil alle Elemente nebeneinander gelegt werden können.

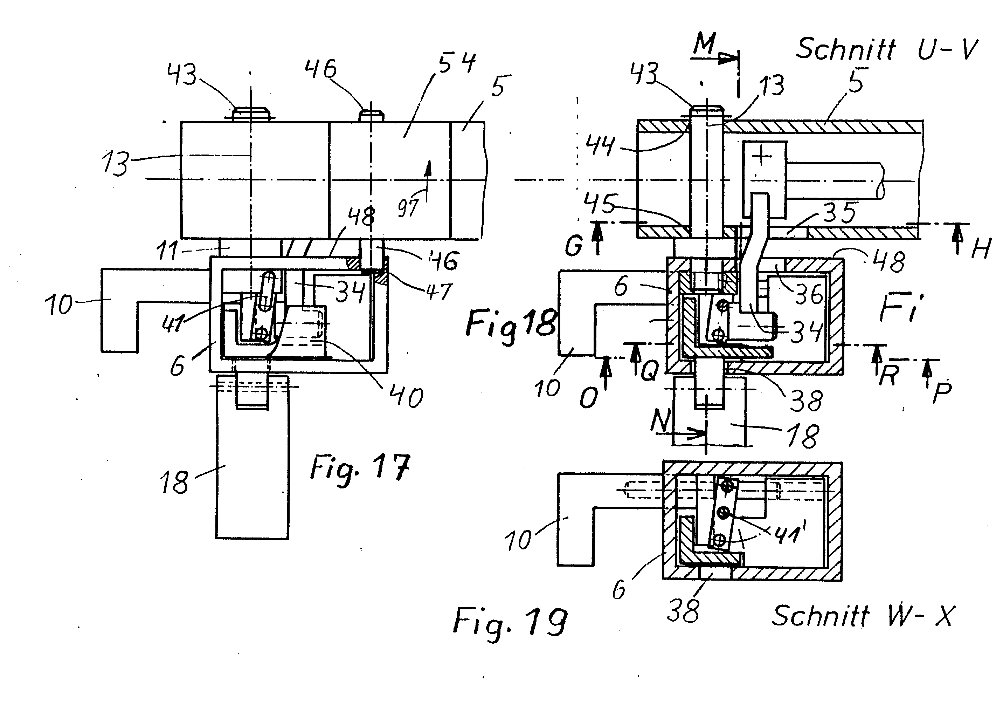

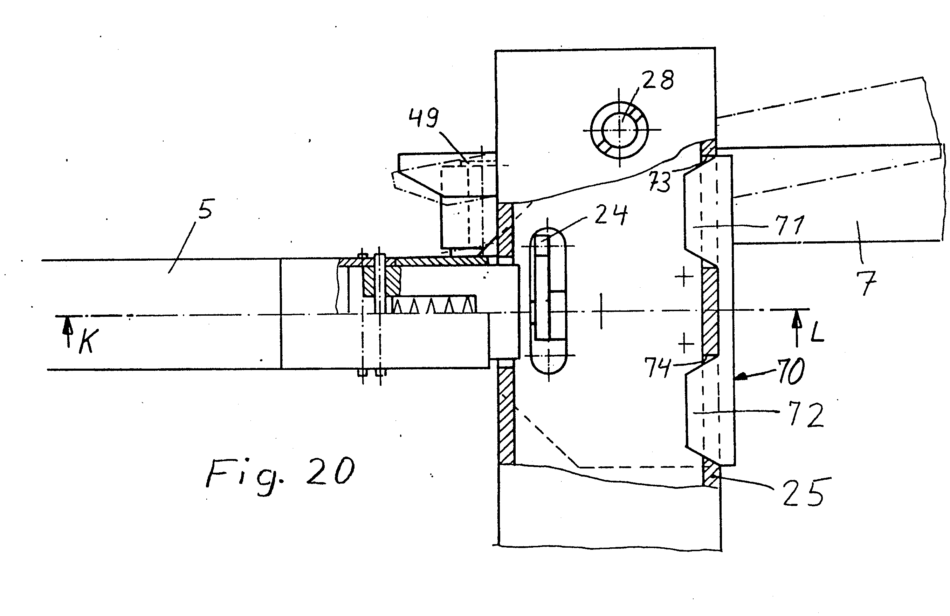

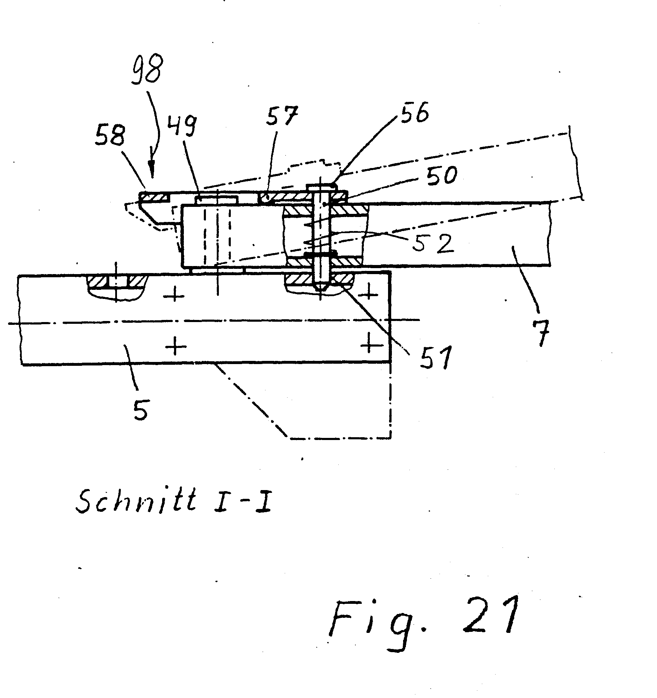

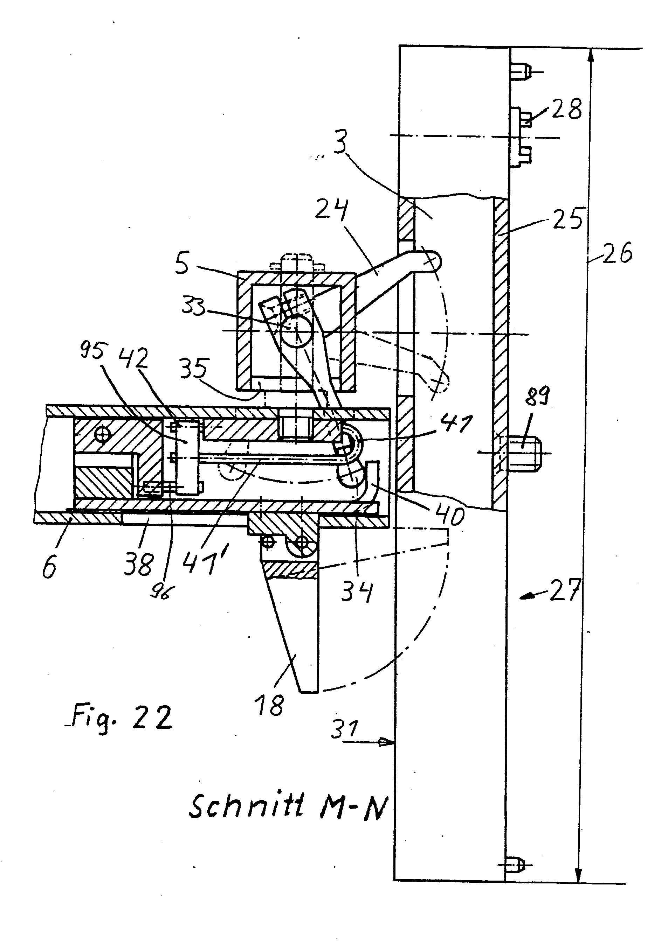

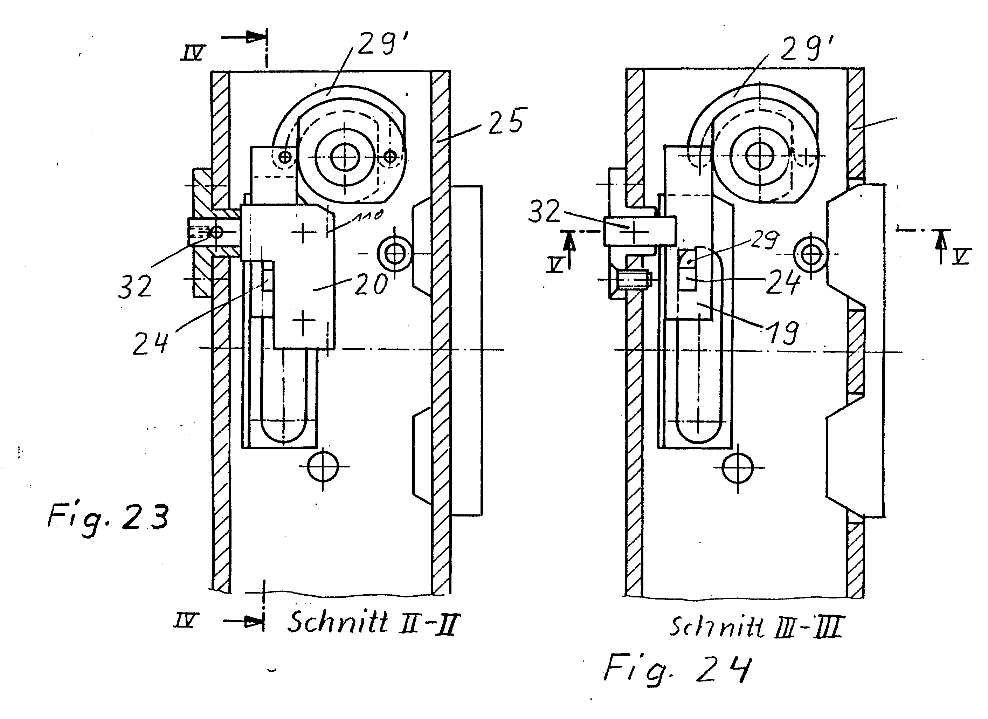

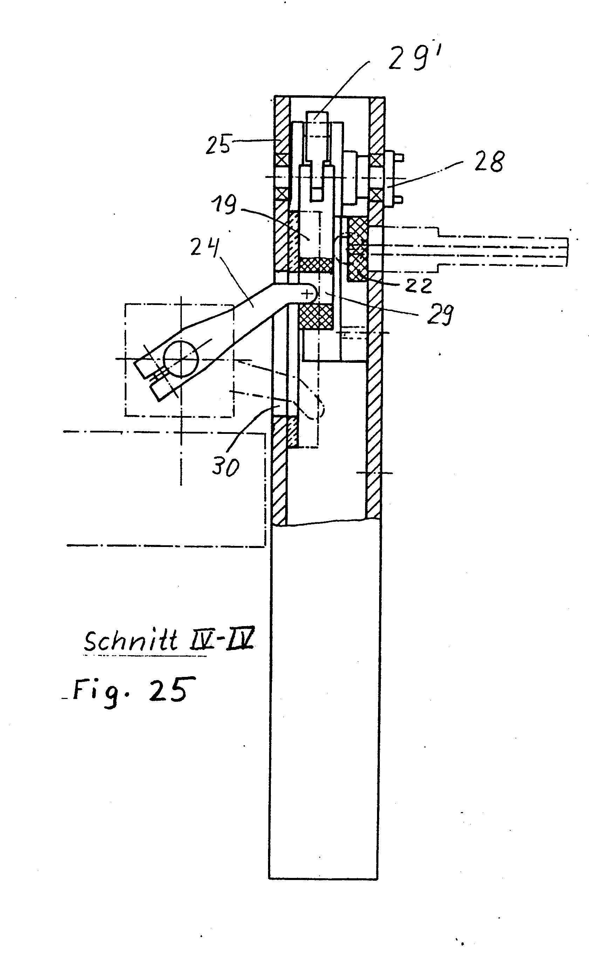

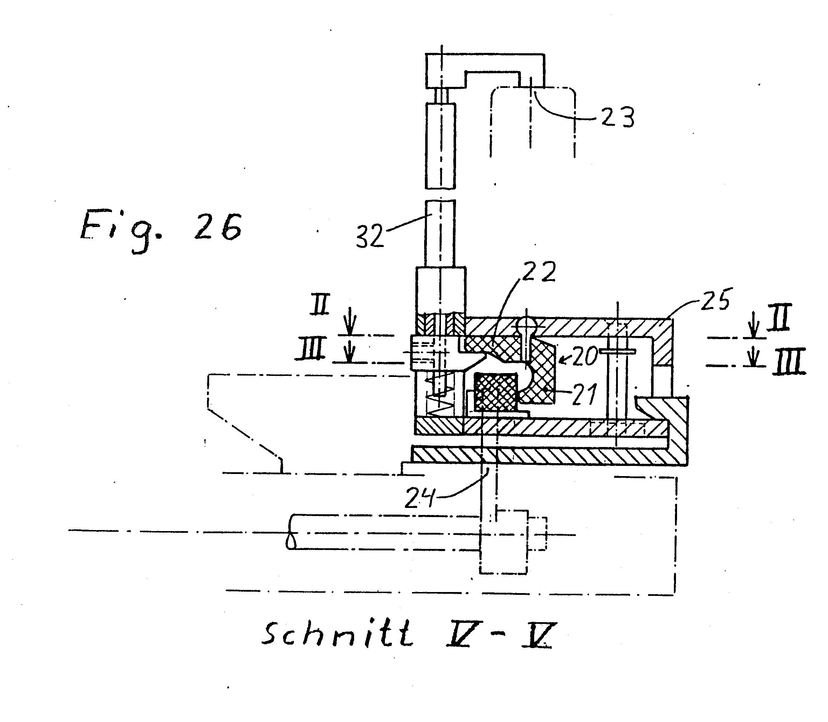

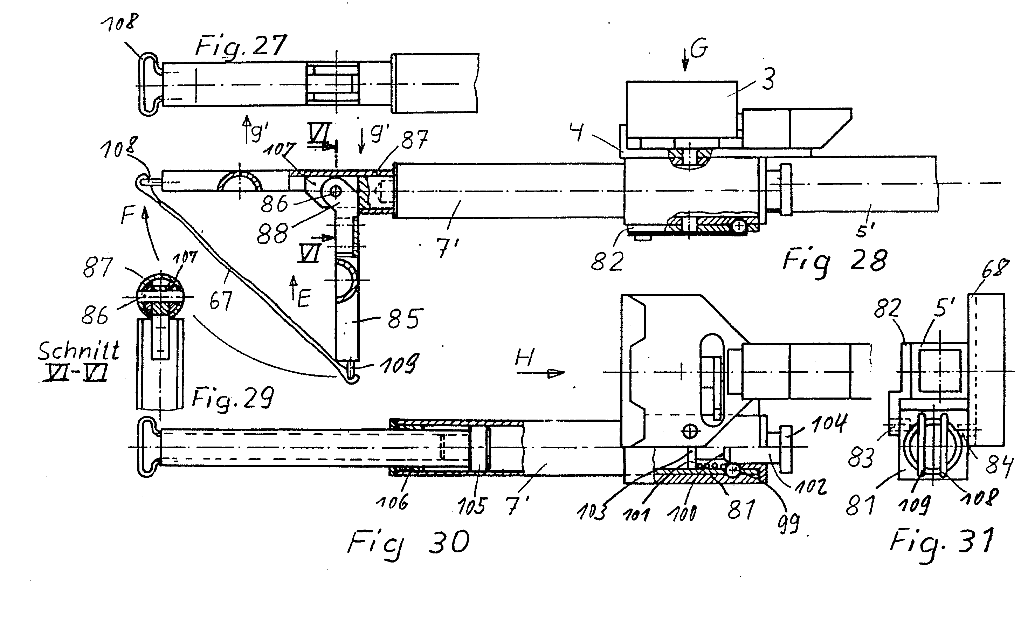

Zur Arretierung des Handgriffs 6 beispielsweise in der in Figur 1 dargestellten Stellung, weist der Träger 5 auf seiner Oberseite kurz hinter dem Gelenkbolzen 43 eine Öffnung 53 auf, welche von einer Verschiebeplatte 54 abgedeckt wird die auf ihrer Unterseite ein Verbindungsstück 55 aufweist. Dieses Verbindungsstück 55 trägt einen Arretierbolzen 46 in zur Schwenkachse 13 des Gelenkbolzens 43 paralleler Anordnung. Der Arretierbolzen 46 steht seitlich über den Träger 5 über und greift mit diesem überstehenden Stück in eine Bohrung 47 in der Seitenwand 48 des Handgriffs 6 ein. In dieser Stellung ist der Handgriff 6 gegen jegliches Verschwenken sicher und starr arretiert. Ein Verschieben der Verschiebeplatte 54 in Richtung des Pfeils 97 (Figur 17) zieht den Arretierbolzen 46 aus der Bohrung 47 heraus, so daß nunmehr der Handgriff 6 in der in Figur 1 durch den Schwenkpfeil angedeuteten Weise eingeklappt werden kann, so daß er nach Einklappen parallel zum Träger 5 liegt. Diese Lage ist dargestellt in den Figuren 5, 6 und 7. Auch in dieser Lage kann eine der Bohrung 47 entsprechende zweite Bohrung in der Seitenwand 48 des Handgriffs 6 vorgesehen sein, so daß auch diese Lage des Handgriffs 6 arretierbar ist. Hierbei ist es natürlich auch möglich, den Arretierbolzen 46 in Arretierrichtung durch eine Feder vorbelastet zu halten.

Der Ausleger 7 ist in ganz ähnlicher Weise wie der Handgriff 6 schwenkbar am Träger 5 angeordnet. Der hierzu erforderliche Gelenkbolzen 49 ist nunmehr allerdings im Träger 5 starr befestigt und der Ausleger 7 ist, wie in Figur 21 dargestellt, schwenkbar auf dem Gelenkbolzen 49 angeordnet, wobei auch hier eine Sicherung gegen seitliches Herausfallen in beliebiger Weise erfolgen kann. Mindestens in Gebrauchsstellung ist hierbei der Ausleger 7 über den in ihm parallel zur Achse des Gelenkbolzens 49 verschieblich angeordneten Arretierbolzen 50 arretiert. Hierzu greift der Arretierbolzen 50 in eine entsprechende Gegenbohrung 51 im Träger 5 ein und steht in dieser Lage unter der Vorlast einer Feder 52.

Der Arretierbolzen 50 weist auf seiner Außenseite einen Kopf 56 auf, unter den ein Blech 57 greift, welches eine außen überstehende Griffleiste 58 aufweist. Wird die Griffleiste 58 in Richtung des Pfeils 98 betätigt, so wird hierdurch der Arretierbolzen 50 gegen die Kraft der Feder 52 angehoben, wodurch die Arretierung zwischen Träger 5 und Ausleger 7 aufgehoben wird. Träger 5 und Ausleger 7 können nunmehr zusammengeklappt und parallel nebeneinander gelegt werden. Blech 57 mit Griffleiste 58 stehen hierbei wegen ihrer flachen Bauart kaum über. Es ist auch denkbar in diesem zusammengeklapptem Zustand beispielsweise den Gelenkbolzen 49 in beiden Bauteilen, nämlich dem Träger 5 und dem Ausleger 7, schräg anzuordnen. Hierdurch erhält der Ausleger 7 in ausgeklapptem Zustand eine von der Schräglage des Gelenkbolzens 49 abhängige Schräglage, wie sie in Fig.4 und Fig.21 durch die gestrichelte Lage angedeutet ist. Ist die Schräglage des Gelenkbolzens 49 nicht nur in einer Ebene sondern in zwei zueinander senkrechten Ebenen, also räumlich, vorgenommen, so ist es möglich daß der Ausleger 7 beim Ausschwenken nicht

nur seitlich schräg sondern auch schräg nach unten in ausgeklapptem Zustand steht, wie das als zweite Ebene in der gestrichelten Darstellung in Figur 1 veranschaulicht ist. Eine solche Anordnung des Auslegers 7 kann in besonderen Anwendungsfällen vorteilhaft sein.

Auch die Schulterstütze 9 weist eine besonders vorteilhafte Beweglichkeit auf und ist zusammenklappbar. Hierzu ist der Ausleger 7 an seinem freien Ende geschlitzt und weist eine von den verbleibenden Wänden des Auslegers 7 getragene Schwenkachse 16 auf. Auf dieser Schwenkachse 16 drehbar gelagert ist das bereits beschriebene Schwenkstück 59 in der eingangs bereits beschriebenen Weise. Wie eingangs bereits beschrieben, lassen sich die Halter 65 und 66 der Schulterstütze 9 zusammenlegen und in diesem Zustand durch Verschwenken des Schwenkstücks 59 um die Schwenkachse 16 an den Ausleger 7 anlegen. Im Gebrauchszustand kann die Schulterstütze 9 noch um die Schwenkachse 17 geschwenkt werden, wie in Figur 3 dargestellt, so daß bei gleich stabiler Lage der Schulterstütze auch Aufnahmen im Hochformat problemlos möglich sind.

Ein Ausführungsbeispiel einer alternativen Ausführung der Gestaltung des Auslegers ist in den Figuren 27 bis 31 dargestellt. Nach diesem Ausführungsbeispiel weist ein Träger 5' an seinem adapterseitigen Ende eine Platte 82 auf der dem Adapter gegenüberliegenden Seite des Auslegers 5' -also unten- angeordnet auf. Im übrigen ist der Träger 5' identisch mit dem bereits beschriebenen Träger 5. Auf der Platte 82 ist in Gebrauchshaltung rechts neben dem Träger 5' eine Schiebemuffe 81 angeordnet, die außen einen quadratischen Querschnitt haben kann und die auf der Platte 82 um die Hochachse 83 schwenkbar angeordnet sein kann. Es ist zur Erzeugung einer räumlichen Schrägschwenkung der Schiebemuffe 81 auch möglich, in der Bodenplatte 68 eine zweite Hochachse 84 zur Lagerung der Schiebemuffe 1 vorzusehen, die gegenüber der Hochachse 83 entsprechend seitlich versetzt ist, wie in Figur 31 dargestellt.

Die Schiebemuffe 81 kann innen ausgebildet sein zur verschieblichen Aufnahme eines Auslegers 7' von kreisförmigem Querschnitt. Der Ausleger 7' mit kreisförmigem Querschnitt kann hierbei als Rohr ausgebildet sein. Zur Arretierung des Auslegers 7' in Gebrauchsstellung (Figur 30) können in der Schiebemuffe 81 Versenkungen oder Öffnungen vorgesehen sein, in welche Kugelkörper 99 einrasten können ohne hindurchzufallen. In das Ende des Auslegers 7' an der Seite der Schiebemuffe 81 ist ein Käfig eingesetzt der solche Kugeln 99 trägt und gegeneinander separiert. In den Käfig eingesetzt ist ein verschiebbarer Stützdorn 102 mit einer Rille 100 zur Aufnahme der Kugeln 99. An seinem inneren Ende weist der Stützdorn 102 einen Kragen 103 auf, an welchem sich eine Spiraldruckfeder 101 abstützt, welche auf ihrer zweiten Seite am nicht näher bezeichneten Käfig für die Kugeln 99 anliegt. Hierdurch wird von der Feder 101 der Stützdorn 102 immer so belastet, daß die Kugeln 99 in den hierfür vorgesehenen Öffnungen im Ausleger 7' gefangen sind. Der Ausleger 7' ist hierdurch sicher arretiert in der Schiebemuffe 81. Ein zu weites Durchziehen des Stützdorns 102 durch die Feder 101 wird hierbei von dem Kragen 104 verhindert. Auf die Art der Arretierung kommt es jedoch nicht an, es ist auch ohne weiteres ein einfacher Querbolzen als Arretierung für den Ausleger 7' in der Schiebemuffe 81 möglich.

Innerhalb des als Rohr ausgebildeten Auslegers 7' ist von dessen zweitem Ende her ein weiteres Rohr, welches die Schulterstütze 9' bildet, verschiebbar angeordnet.

Diese als Rohr ausgebildete Schulterstütze 9' weist an ihrem inneren Ende eine Platte 105 auf, die durch hereinschieben in den Ausleger 7' an dem Kragen 103 zur Anlage gebracht und durch weitere Verschiebung den Stützdorn 102 gegen die Kraft der Feder 101 verschieben kann. Hierdurch wird die beschriebene Verriegelung gelöst.

In herausgezogener Gebrauchslage liegt der Kragen 105 an der Innenseite einer in dem Ausleger 7' angeordneten Schiebehülse 106 an, so daß ein Herausfallen der Schulterstütze 9' verhindert wird.

Ausleger 7' und Schulterstütze 9' müssen nicht unbedingt kreisförmigen Querschnitt haben. Von Bedeutung ist jedoch, daß das Profil 87 der Schulterstütze 9' dem Profil des Auslegers 7' entspricht. Es ist ebenfalls nicht unbedingt erforderlich, daß im beschriebenen Ausführungsbeispiel die Schulterstütze 9' rohrförmig ausgebildet ist, sie kann ebensogut aus Vollmaterial mit kreisförmigem Querschnitt (wegen des Querschnitts des Auslegers 7') bestehen.

Die rohrförmig ausgebildete Schulterstütze 9' nach dem beschriebenen Ausführungsbeispiel ist von ihrem zweiten Ende her in einer Mittenebene des Profils aufgeschlitzt und an der Schlitzwurzel die zweite Querschnittshälfte 85 getrennt. Diese zweite Querschnittshälfte 85 ist nun an einem Gelenkstück 88 in der in Figur 28 und 29 dargestellten Weise befestigt, wobei das Gelenkstück 88 mittels des Gelenkbolzens 86 in einem entsprechenden Gegenstück 107, welches in der Schulterstütze 9' angeordnet ist, schwenkbar gelagert ist. Beide freien Enden der Schulterstütze 9' weisen Bügel 108 bzw. 109 auf, die wiederum mit dem flexieblen Band 67 zur Bildung einer Schulterauflage miteinander verbunden sein können. Es ist nun möglich, die zweite Querschnittshälfte 85 in Richtung des Pfeils F nach Figur 28 einzuklappen und danach in diesem eingeklappten Zustand die Schulterstütze 9' in den Ausleger 7' hineinzuschieben und nach dem Ausführungsbeispiel dadurch gleichzeitig die Verriegelung des Auslegers 7' zu lösen, der dann seinerseits in der Verschiebemuffe 81 parallel zum Träger 5' verschoben werden kann und damit neben diesen gelegt werden kann. Damit ist dieselbe Anordnung wie bei dem bereits beschriebenen Klappmechanismus erreicht.

Nach dem Ausführungsbeispiel werden die Signale der Auslösetaste 10 und der Filmtransporttaste 18 über entsprechende mechanische Einheiten auf das Gerät 2 übertragen. Eine solche Übertragung ist natürlich ebenfalls elektromagnetisch möglich. So kann beispielsweise das Schiebestück 19 als Anker einer Spule ausgebildet sein, die bei Betätigung eines anstelle der Taste 18 vorgesehenen Knopfes unter Strom gesetzt wird. Die hierfür notwendigen Batterien können problemlos im Handgriff 6 und ggfls. zusätzlich im Träger 5 angeordnet werden. Es genügt dann anstelle der Mechanik für die Taste 18 ein Druckknopf mit einem entsprechenden elektrischen Kontakt. Die unter Strom gesetzte Spule zieht dann das als Anker ausgebildete Schiebeteil 19 ein und verursacht somit die gewünschte Bewegung. Es ist aber ebenso gut denkbar, daß zur Betätigung der Filmtransporteinrichtung des Gerätes 2 im Gerät selbst oder im Adapter 3 ein normaler Elektromotor vorgesehen ist, der dann von der Taste 18 bzw. dem entsprechenden elektrischen Schaltkontakt geschaltet wird.

Gleiches bietet sich auch für die Auslösebetätigung an. Auch hier kann beispielsweise die Auslöseeinrichtung 32 als Anker eines Elektormagneten ausgebildet sein der -von der Taste 10 unter Strom gesetzt- ebenfalls die gewünschte Bewegung erzeugt.

Insgesamt hat jedoch die mechanische Ausführung den Vorteil von Batterien oder sonstigen Stromquellen unabhängig zu sein.

Mit dem erfindungsgemäßen Stativ wird ein Gerät vorgeschlagen, welches einfach herstellbar, sicher handhabbar und dennoch auf kleinstem Raum zusammenklappbar ist. Die besondere Anordnung der einzelnen Baugruppen gewährleistet eine besonders günstige und daher stabile Schwerpunktlage eines fotografischen Gerätes und daher eine sichere und mühefreie Bedienung und Führung der Kamera. Gleichzeitig wird durch diese besondere Anordnung erreicht, daß die Sucherlage der Kamera in einer angenehmen Ebene für das Auge des Bedieners liegt, so daß eine ermüdungsfreie Kopfhaltung erreicht wird. Die Befestigung der Kamera selbst ist sicher und verhindert ein Lösen und Verschwenken der Kamera in Hochformatlagen.

Durch den besonderen Aufbau wird ebenfalls erreicht, daß die notwendigen wichtigsten Bedienelemente für die Kamera, nämlich die Auslösung und der Filmtransport und bei Bedarf weitere Betätigungen wie z.B. die Betätigung des Meßwertspeichers einhändig vom Handgriff des Stativs aus sicher durchgeführt und beherrscht werden können, so daß bei ruhiger Kameralage eine schnelle Bildfolge problemlos möglich wird. Zusätzlich zu befestigende Geräte wie z.B. Drahtauslöser, sind zum Betrieb der Kamera nicht mehr erforderlich. Wenn die Kamera mit ihrem Adapter eingesetzt ist, ist sie betriebsbereit.

Liste der verwendeten Bezugszeichen

1    Schulter-Hand-Stativ

2    fotografisches Gerät

3    Adapter

4    Halter

5    Träger

5'   Träger

6    Handgriff

7    Ausleger

7'   Ausleger

8    zweites Ende des Auslegers

9    Schulterstütze

9'   Schulterstütze

10   Taste

11   Verbindung am Träger

12   Verbindung am Träger

13   Schwenkachse

14   Schwenkachse

15   Verbindung an der Schulterstütze

16   Schwenkachse

17   Schwenkachse

18   Taste

19   Schiebeteil

20   Winkelhebel

21   Arm des Winkelhebels

22   Arm des Winkelhebels

23   Auslöser

24   Betätigungshebel

25   rechteckiges Kastenprofil

26   Länge

27   Oberseite

28   Drehkupplung

29   Öffnung

29'  elastisches Zugelement

30   Ausnehmung

| | |
|---|---|
| 31 | Unterseite |
| 32 | Auslöseeinrichtung |
| 33 | Schwenkachse |
| 34 | Betätigungshebel |
| 35 | Öffnung |
| 36 | Öffnung |
| 37 | Feder |
| 38 | Längsschlitz |
| 39 | Längsführung |
| 40 | Mitnehmer |
| 41 | Betätigungsleiste |
| 41' | zweiter Arm |
| 42 | Achse |
| 43 | Gelenkbolzen |
| 44 | Lagerbohrung |
| 45 | Lagerbohrung |
| 46 | Arretierbolzen |
| 47 | Bohrung |
| 48 | Seitenwand |
| 49 | Gelenkbolzen |
| 50 | Arretierbolzen |
| 51 | Gegenbohrung |
| 52 | Feder |
| 53 | Öffnung |
| 54 | Verschiebeplatte |
| 55 | Verbindungsstück |
| 56 | Kopf |
| 57 | Blech |
| 58 | Griffleiste |
| 59 | Schwenkstück |
| 60 | Seiten |
| 61 | Seiten |
| 62 | Kreisbogenstück |
| 63 | Vertiefung |
| 64 | Vertiefung |
| 65 | Halter |
| 66 | Halter |

| | |
|---|---|
| 67 | flexibles Band |
| 68 | Bodenplatte |
| 69 | unbenutzt |
| 70 | Rückseite |
| 71 | Kralle |
| 72 | Kralle |
| 73 | Fixieröffnung |
| 74 | Fixieröffnung |
| 75 | Riegel |
| 76 | Anschlaggehäuse |
| 77 | Feder |
| 78 | Kipphebel |
| 79 | Positionierbolzen |
| 80 | Bohrung |
| 81 | Schiebemuffe |
| 82 | Platte |
| 83 | Hochachse |
| 84 | Hochachse |
| 85 | zweite Querschnittshälfte |
| 86 | Gelenkbolzen |
| 87 | Profil |
| 88 | Gelenkstück |
| 89 | Gewindebolzen |
| 90 | Öffnung |
| 91 | Schraube |
| 92 | Schraube |
| 93 | Lagerstück |
| 94 | Lagerstück |
| 95 | Druckstück |
| 96 | Anschlag |
| 97 | Pfeil |
| 98 | Pfeil |
| 99 | Kugel |
| 100 | Rille |
| 101 | Feder |
| 102 | Stützdorn |

103  Kragen
104  Kragen
105  Platte
106  Schiebehülse
107  Gegenstück
108  Bügel
109  Bügel
110  Schwenkachse

Schutzansprüche

1. Schulter-Hand-Stativ für fotografische Geräte mit einem Aufnahmeteil (3,4), welches auf einem Träger angeordnet ist, der einerseits mit einem Handgriff und andererseits mit einem Ausleger verbunden ist, wobei das zweite Ende des Auslegers mit einer zusammenklappbaren Schulterstütze verbunden ist und wobei der Handgriff eine Taste aufweist, die mit dem Gerät zur Auslösung in Wirkverbindung steht, dadurch gekennzeichnet, daß das Aufnahmeteil (3,4) im wesentlichen aus einem am Träger (5) angeordneten Halter (4) mit einem formschlüssig einrastbaren Adapter (3) besteht und daß die Verbindungen (11,12) am Träger (5) als schnellentriegelbare Schwenkgelenke mit nur einer Schwenkachse (13,14) und die Verbindung (15) an der Schulterstütze als Gelenk mit zwei rechtwinklig zueinanderstehenden Schwenkachsen (16,17) ausgebildet ist, wobei der Träger (5) in Gebrauchshaltung links neben dem Ausleger (7) angeordnet ist und daß am Handgriff (6) mindestens eine weitere Taste (18) für den Filmtransport vorgesehen ist, wobei die Übertragungseinrichtungen aller Tastensignale im wesentlichen im Inneren des Stativs (1) und am Aufnahmeteil (3,4) angeordnet sind.

2. Einrichtung nach Anspruch 1 dadurch gekennzeichnet, daß der Adapter (3) mindestens eine Betätigungseinrichtung (19,20) aufweist, die einerseits mit dem Auslöser (23) für das Gerät (2) und andererseits mit der Taste (10) zur Auslösung am Handgriff (6) mechanisch und/oder elektromagnetisch verbunden ist.

3. Einrichtung nach Anspruch 2 dadurch gekennzeichnet, daß der Adapter (3) eine Betätigungseinrichtung aufweist, die einerseits mit dem Filmtransportsystem der Kamera (2) und andererseits mit der weiteren Taste (18) am Handgriff (6) in Wirkverbindung steht.

4. Einrichtung nach einem der Ansprüche 1 bis 3 dadurch gekennzeichnet, daß der Adapter (3) als rechteckiges Kastenprofil (25) etwa von der Länge (26) der Kamera-breite ausgebildet und auf dessen Oberseite (27) die Kamera (2) befestigbar ist, wobei im Inneren des Kastenprofils (25) eine mit der Transporteinrichtung der Kamera (2) verbundene, federrückstellbare Drehkupplung (28) vorgesehen ist, die über ein flexibles Zugelement (29) mit einem Schiebeteil (19) verbunden ist, welches seinerseits über eine Öffnung (29) durch eine Ausnehmung (30) auf der Unterseite (31) des Adapters (3) mit einem im Stativ (1) angeordneten Betätigungshebel (24) einerseits und mit einem Arm (21) eines im Inneren des Kastenprofils (25) angeordneten Winkelhebels (20) andererseits in Wirkverbindung steht, wobei der zweite Arm (22) des Winkelhebels (20) eine Auslöseeinrichtung (32) betätigt.

5. Einrichtung nach Anspruch 4 dadurch gekennzeichnet, daß der Betätigungshebel (24) auf einer im Träger (5,5') drehbar und axial verschiebbar gelagerten Schwenkachse (33) befestigt ist, auf deren handgriffseitigem Ende ein weiterer Betätigungshebel (34) befestigt ist, der durch entsprechende Öffnungen (35,36) in den Handgriff (6) hineinragt und dort von der Taste (18) für den Filmtransport geschwenkt und von der Taste (10) für die Auslösung axial verschoben wird.

6. Einrichtung nach Anspruch 5 dadurch gekennzeichnet, daß die Schwenk- und Verschiebebewegung gegen eine Vorlast einer Feder (37) erfolgt.

7.  Einrichtung nach einem der Ansprüche 1 bis 6 dadurch gekennzeichnet, daß die Taste (18) für den Filmtransport durch einen Längsschlitz (38) seitlich des Haltegriffes (6) in diesen hinein und dort in einer Längsführung (39) für einen Daumen erreichbar und verschiebbar geführt und über einen Mitnehmer (40) mit dem Betätigungshebel (34) in Wirkverbindung gebracht ist.

8.  Einrichtung nach einem der Ansprüche 1 bis 7 dadurch gekennzeichnet, daß die Taste (10) für die Auslösung als Drucktaste für eine Zeigefingerbetätigung im Inneren des Handgriffes (6) mit einer am Betätigungshebel (34) anliegenden Betätigungsleiste (41) verbunden ist.

9.  Einrichtung nach Anspruch 8 dadurch gekennzeichnet, daß die Betätigungsleiste (41) als um eine Achse (42) parallel zur Ebene der Schwenkbewegung des Betätigungshebels (34) schwenkbarer Schwenkbügel ausgebildet ist.

10. Einrichtung nach einem der Ansprüche 1 bis 9 dadurch gekennzeichnet, daß der Handgriff (6) als rechteckiges Kastenprofil ausgebildet ist und über einen am Kastenprofil angeordneten Gelenkbolzen (43) als Schwenkachse (13) schwenkbar in entsprechenden Lagerbohrungen (44,45) des Trägers (5) gelagert und über einen zweiten, im Träger (5) unter Federvorlast parallel zum Gelenkbolzen (43) verschiebbaren Arretierbolzen (46), der in eine entsprechende Bohrung (47) des Handgriffes (6) einrastet, in Benutzungslage arretiert ist.

11. Einrichtung nach Anspruch 10 dadurch gekennzeichnet, daß nach Einschwenken des Handgriffes (6) um 90° der Arretierbolzen (46) in eine an entsprechender Stelle in einer Seitenwand (48) des Handgriffes (6) vorgesehene Arretierzentrierung einrastet.

12. Einrichtung nach einem der Ansprüche 1 bis 11 dadurch
gekennzeichnet, daß Träger (5) und Ausleger (7)
aus rechteckigem oder quadratischem Kastenprofil
gebildet und über einen Gelenkbolzen (49) parallel
zum Gelenkbolzen (43) des Handgriffes (6) um die
Schwenkachse (14) schwenkbar miteinander verbunden
sind, wobei in Gebrauchslage beide Teile über einen
unter Vorlast einer Feder (52) parallel zum Gelenkbolzen
(49) verschieblichen Arretierbolzen (50), der in
eine entsprechende Gegenbohrung (51) eingreift,
arretiert sind.

13. Einrichtung nach Anspruch 10 dadurch gekennzeichnet,
daß im Träger (5) und oberhalb des Arretierbolzens
(46) eine Öffnung (53) vorgesehen ist, welche von
einer Verschiebeplatte (54) abgedeckt ist, die mit
einem Verbindungsstück (55) mit dem Arretierbolzen
(46) verbunden ist.

14. Einrichtung nach Anspruch 12 dadurch gekennzeichnet,
daß der Arretierbolzen (50) mit einem Kopf (56)
nach außen übersteht, unter den ein parallel zum
Ausleger (7) angeordnetes Blech (57) greift, welches
mit einer Griffleiste (58) frei übersteht und bei
Betätigung der Griffleiste (58) den Arretierbolzen
(50) verschiebt.

15. Einrichtung nach einem der Ansprüche 1 bis 14 dadurch
gekennzeichnet, daß das zweite Ende (8) des Auslegers
(7) gabelförmig geschlitzt ist und die verbleibenden
Stege eine Schwenkachse (16) tragen, auf der ein
Schwenkstück (59) drehbar gelagert ist mit zwei
rechtwinklig zueinander stehenden Seiten (60,61)
und einem verbindenden Kreisbogenstück (62), wobei
das Kreisbogenstück (62) zwei um 90° versetzte Vertiefungen (63,64) aufweist, in welche ein im Ausleger (7) unter Federvorlast verschieblich angeordnetes Positionierstück einrasten kann und wobei das Schwenkstück (59) rechtwinklig zu einer Seite (61) und zur Achse (16) für das Schwenkstück (59) eine Schwenkachse (17) für die Schulterstütze (9) trägt.

16. Einrichtung nach einem der Ansprüche 1 bis 15 dadurch gekennzeichnet, daß die Schulterstütze (9) im wesentlichen aus an ihrem einen Ende um etwa 90° aufklappbar miteinander verbundenen Haltern (65,66) besteht, deren zweite Enden über ein flexibles Band (67) miteinander verbunden sind, wobei der eine Halter (66) auf der Schwenkachse (17) für die Schulterstütze (9) drehbar angeordnet ist.

17. Einrichtung nach einem der Ansprüche 1 bis 16 dadurch gekennzeichnet, daß der Halter (4) im wesentlichen aus einer auf dem Träger (5) angeordneten Bodenplatte (68) mit einer Ausnehmung (69) für den Betätigungshebel (24) besteht, deren Rückseite (70) in einem Abstand zur Bodendplatte (68) zwei vorwärts gerichtete Krallen (71,72) aufweist, die in entsprechende Fixieröffnungen (73,74) des Adapters (3) eingreifen, wobei auf der gegenüberliegenden Seite ein Riegel (75) in einem Anschlaggehäuse (76) für die erforderliche Axialfixierung und Niederhaltung des Adapters (3) sorgt.

18. Einrichtung nach Anspruch 17 dadurch gekennzeichnet, daß der Riegel (75) unter der Vorlast einer Feder (77) steht und über einen Kipphebel entriegelt werden kann.

19. Einrichtung nach Anspruch 17 dadurch gekennzeichnet, daß die Bodenplatte (68) einen Positionierbolzen (79) aufweist, der in eine entsprechende Bohrung des Adapters (3) eingreift.

20. Einrichtung nach Anspruch 12 dadurch gekennzeichnet, daß der Gelenkbolzen (49) leicht geneigt im Träger (5) fest angeordnet ist und die Gelenkbohrung im Ausleger (7) bei eingeklapptem Ausleger (7) mit gleicher Neigung ausgeführt ist.

21. Einrichtung nach dem Gattungsbegriff des Anspruchs 1 dadurch gekennzeichnet, daß die Verbindung von Ausleger (7') und Träger (5') als Schiebeverbindung gestaltet ist.

22. Einrichtung nach Anspruch 21 dadurch gekennzeichnet, daß mit dem Träger (5') etwa in Höhe des Aufnahmeteils (3,4) eine Schiebemuffe (81) verbunden ist und der Ausleger (7') in der Schiebemuffe (81) verschieblich und in Gebrauchslage formschlüssig arretierbar angeordnet ist.

23. Einrichtung nach Anspruch 22 dadurch gekennzeichnet, daß eine unter Träger (5') und Schiebemuffe (81) befestigte Platte (82) beide Teile miteinander verbindet, wobei die Schiebemuffe (81) auf der Platte (82) um eine Hochachse (83) schwenkbar angeordnet ist.

24. Einrichtung nach Anspruch 23 dadurch gekennzeichnet, daß die Schwenkbewegung der Schiebemuffe (81) durch eine Arretierung rastbar ist.

25. Einrichtung nach einem der Ansprüche 1-24 dadurch gekennzeichnet, daß der Ausleger (7') als Hohlprofil ausgebildet ist in dem ein Profil (87) gleicher Querschnittsform angeordnet ist, dessen Querschnitt über einen genügend langen Teil längsgeteilt ist, wobei eine zweite Hälfte (85) des Querschnitts abgetrennt und über einen Gelenkbolzen (86) mit dem inneren Profil (87) aufklappbar verbunden ist.

Fig. 1

Fig. 2

Fig. 3

Fig. 4

Fig. 5

Fig. 6

Fig. 7

Fig. 8

C122332

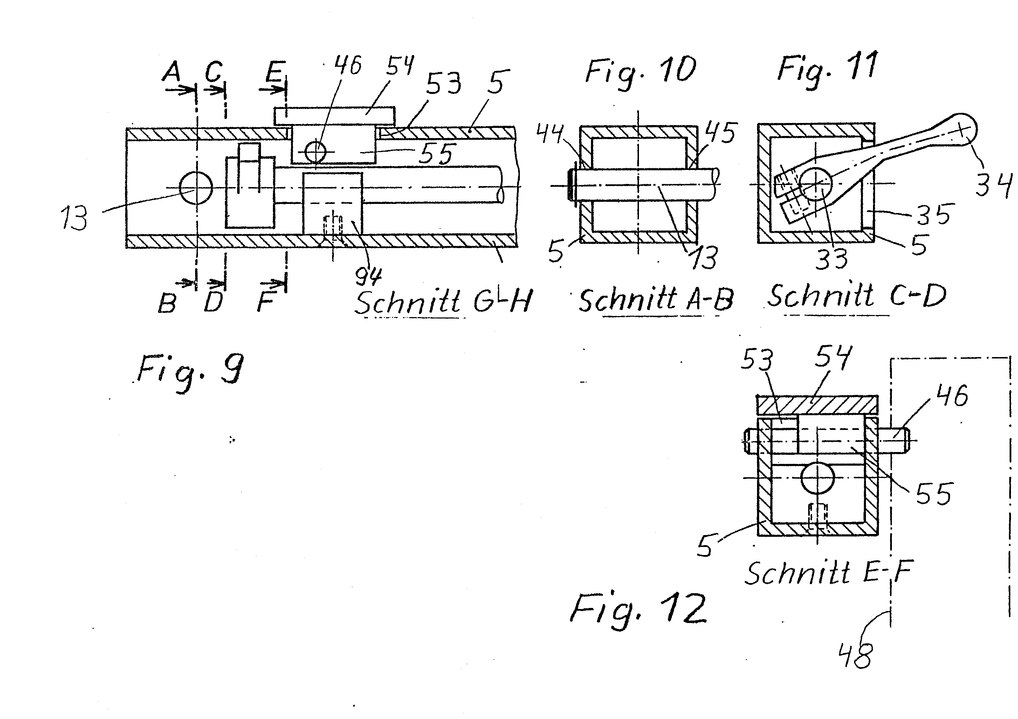

Fig. 11 — Schnitt C-D

Fig. 10 — Schnitt A-B

Fig. 12 — Schnitt E-F

Fig. 9 — Schnitt G-H

0122332

Schnitt O-P

**Fig. 13**

Schnitt Q-R

**Fig. 14**

Schnitt K-L

Fig. 15

0122332

Fig. 16

27
3
79
80
24
5

0122332

Fig. 17

Fig 18

Schnitt U–V

Fig. 19

Schnitt W–X

Fig. 20

0122332

Schnitt I-I

Fig. 21

Fig. 22

Schnitt M-N

Fig. 23

Schnitt II-II

Fig. 24

Schnitt III-III

0122332

Schnitt IV-IV

Fig. 25

Fig. 26

Schnitt V - V

Fig. 27

108

↓G

3

4

↑g'      ↓g'

108      107   87

86

88

F

87   107

86   67   E   85

Schnitt
VI-VI

109

Fig. 29

Fig. 28

82

7'

5'

82   5'   68

H

104

83

84

106   105   7'

103  101  100  81  99  102

81  109  108

Fig. 30

Fig. 31

01-22332

## Europäisches Patentamt
## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-3 002 663  (A.L. FERNELIUS) <br> * Spalten 2-4; Figuren 1-5 * | 1,8,25 | G 03 B  17/56 <br> F 16 M  13/04 |
| A | US-A-3 105 430  (A.L. FERNELIUS) <br> * Spalten 3-7; Figuren 1-7 * | 1,8,17 ,25 | |
| A | US-A-2 926 591  (C.D. HUFFMAN) <br> * Spalten 2,3; Figuren 1-8 * | 1,12 | |
| A | DE-A-2 925 414  (R. MOLL) <br> * Seiten 9-13; Figuren 1-6 * | 1 | |
| A | GB-A-2 037 001  (S.N. HOARE) <br> * Seiten 1,2; Figuren 1-4 * | 15,16 | |
| A | GB-A-  8 054  (OPTISCHE ANSTALT C.P. GOERZ)(A.D.1909) <br> * Seiten 1,2; Figuren 1-4 * | 17,18 | **RECHERCHIERTE SACHGEBIETE (Int. Cl. 3)** <br><br> G 03 B  17/56 <br> F 16 M  13/04 <br> F 16 M  11/02 <br> F 16 M  11/04 |

Der vorliegende Recherchenbericht wurde für alle Patentansprüche erstellt.

| Recherchenort | Abschlußdatum der Recherche | Prüfer |
|---|---|---|
| DEN HAAG | 25-06-1984 | BOEYKENS J.W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82